# EUROPÄISCHE PATENTSCHRIFT

(11) **EP 4 390 589 B1**
(45) Veröffentlichungstag und Bekanntmachung des Hinweises auf die Patenterteilung: **08.04.2026**
(21) Anmeldenummer: 23214701.7
(22) Anmeldetag: 06.12.2023
(51) Int. Cl.: G05B 19/418, B67C 3/00, G05B 23/02, B25J 9/16

(54) **VERFAHREN UND VORRICHTUNG ZUR QUALITÄTSSICHERUNG EINER BEHÄLTERBEHANDLUNGSANLAGE**
METHOD AND DEVICE FOR QUALITY ASSURANCE OF A CONTAINER TREATMENT INSTALLATION
PROCÉDÉ ET DISPOSITIF POUR ASSURER LA QUALITÉ D'UNE INSTALLATION DE TRAITEMENT DE RÉCIPIENTS

(30) Priorität: 22.12.2022 DE 102022134581
(43) Veröffentlichungstag der Anmeldung: 26.06.2024
(73) Patentinhaber: KRONES AG, 93073 Neutraubling (DE)
(72) Erfinder: Boettcher, Benedikt, 93073 Neutraubling (DE); Senn, Konrad, 93073 Neutraubling (DE); Meyer, Andreas, 93073 Neutraubling (DE); Stubenhofer, Markus, 93073 Neutraubling (DE); Aust, Robert, 93073 Neutraubling (DE)
(74) Vertreter: Grünecker Patent- und Rechtsanwälte PartG mbB

(56) Entgegenhaltungen:
- EP-A1- 3 734 378
- EP-A2- 2 472 103
- DE-A1- 102018 008 855

## Beschreibung

Die Erfindung bezieht sich auf ein Verfahren zur Qualitätssicherung einer Behälterbehandlungsanlage gemäß unabhängigem Anspruch 1 und eine entsprechende Vorrichtung gemäß unabhängigem Anspruch 7.

### Stand der Technik

Im Stand der Technik ist es bekannt, den Betrieb von Behälterbehandlungsanlagen zu überwachen, um mögliche Fehlfunktionen an den Behälterbehandlungskomponenten der Behälterbehandlungsanlage zu erkennen und zu beheben. Somit kann sichergestellt werden, dass die Behälterbehandlung mit gleichbleibender Qualität durchgeführt werden kann. Typischerweise findet zur Qualitätssicherung eine Überwachung der Maschinenparameter der einzelnen Komponenten der Behälterbehandlungsanlage statt. Wird eine Abweichung eines Maschinenparameters von einem Sollwert festgestellt, kann anhand der Abweichung auf das Vorliegen einer Fehlfunktion rückgeschlossen werden und die Abweichung durch Nachregelung eines Maschinenparameters behoben werden.

Des Weiteren ist es zur Qualitätssicherung bekannt, eine physische Eigenschaft eines Behälters nach der Behandlung messtechnisch zu erfassen und mit einem vorgegebenen Sollwert zu vergleichen. Wird eine Abweichung des physischen Parameters von dem Sollwert festgestellt, kann durch Anpassung eines Maschinenparameters reagiert werden.

Aus der EP 3 681 692 B1 ist zudem bekannt, den zeitlichen Verlauf eines Steuerparameters zu erfassen und aus dem zeitlichen Verlauf des Steuerparameters eine etwaige Veränderung einer Bauteilcharakteristik eines dem Steuerparameter zugeordneten Bauteils abzuleiten. Zur bedarfsgerechten Festlegung von Wartungsintervallen oder -terminen oder zur von an der Verschleißgeschwindigkeit einzelner Baugruppen der verschiedenen Umformstationen orientierten Anberaumung von Wartungsarbeiten ist zudem vorgesehen, die abgeleitete Veränderung der Bauteilcharakteristik zur Abschätzung der zukünftigen Entwicklung der Bauteilcharakteristik zu extrapolieren, wobei insbesondere basierend auf der Extrapolation eine Wartung oder ein Austausch des betreffenden Bauteils terminiert wird.

Die DE 10 2018 008 855 A1 offenbart ein Verfahren zur Identifikation einer fehlerverursachenden defekten Behälterbehandlungseinrichtung in Abfüll- und Verpackungsanlagen der Nahrungsmittel-, Getränke- oder Pharmaindustrie, welches die Schritte des Detektierens einer Vielzahl von Fehlern, des Analysierens der Abfolge des Auftretens der Fehler und des Feststellens, dass Fehler von einer Behälterbehandlungseinrichtung induziert werden, wenn Fehler periodisch wiederkehrend auftreten, umfasst.

### Zu lösende technische Aufgabe

Im Hinblick auf den Stand der Technik liegt die zu lösende technische Aufgabe der vorliegenden Erfindung darin, ein Qualitätssicherungsverfahren für eine Behälterbehandlungsanlage anzugeben, mittels welchem eine umfassende und zugleich ressourceneffiziente Überwachung einer Behälterbehandlungsanlage erreicht und/oder etwaige Fehlfunktion der Behälterbehandlungsanlage zuverlässig rückverfolgt werden können.

### Lösung

Diese Aufgabe wird erfindungsgemäß durch das Verfahren zur Qualitätssicherung einer Behälterbehandlungsanlage gemäß unabhängigem Anspruch 1 und die entsprechende Vorrichtung gemäß unabhängigem Anspruch 7 gelöst. Bevorzugte Ausführungsformen der Erfindung sind in den abhängigen Ansprüchen erfasst.

Bei dem erfindungsgemäßen Verfahren zur Qualitätssicherung einer Behälterbehandlungsanlage, wobei die Behälterbehandlungsanlage mindestens zwei Behälterbehandlungskomponenten umfasst, wird mittels einer Qualitätssicherungseinrichtung basierend auf einer Periodizität, mit welcher an einer ersten Behälterbehandlungskomponente eine Abweichung eines Parameters von einem Sollwert festgestellt wird, eine Fehlfunktion an wenigstens einer der mindestens zwei Behälterbehandlungskomponenten ermittelt.

Mit dem erfindungsgemäßen Verfahren kann mittels der Qualitätssicherungseinrichtung anhand der Periodizität mit welcher eine Abweichung eines Parameters an der ersten Behälterbehandlungskomponente festgestellt wird, eine mögliche Fehlfunktion an der ersten Behälterbehandlungskomponente selbst oder an einer anderen Behälterbehandlungskomponente identifiziert werden. Insbesondere kann auch auf eine mögliche Fehlfunktion einer stromauf angeordneten Behälterbehandlungskomponente rückgeschlossen werden, ohne dass die Fehlfunktion an der stromauf angeordneten Behälterbehandlungskomponente selbst messtechnisch erfasst werden müsste. Folglich kann durch das erfindungsgemäße Verfahren eine umfassende und gleichzeitig ressourceneffiziente Überwachung der Behälterbehandlungskomponenten der Behälterbehandlungsanlage erreicht und anhand der festgestellten Periodizität der Abweichung eine Fehlfunktion zuverlässig ermittelt werden. Insbesondere können durch das erfindungsgemäße Verfahren auch Fehlfunktionen an Behälterbehandlungskomponenten ermittelt werden, welche nicht messtechnisch überwacht werden oder überwacht werden können.

Unter einer Behälterbehandlungskomponente ist eine Komponente der Behälterbehandlungsanlage zu verstehen, welche zur Durchführung eines Behandlungsschritts an einem Behälter geeignet ist. Bei der Behälterbehandlungskomponente kann es sich beispielsweise um eine Heizvorrichtung zum Temperieren von Vorformlingen, um eine Blasformmaschine zum Ausformen der Vorformlinge zu Behältern, um einen Füller zum Befüllen der Behälter mit einem Produkt, um einen Verschließvorrichtung zum Verschließen der befüllten Behälter, um eine Sterilisationsvorrichtung zum Sterilisieren der Behälter, um eine Direktdruckvorrichtung zum Bedrucken der Behälter oder um eine Etikettiervorrichtung zum Etikettieren der Behälter handeln. Es kann sich jedoch auch um jede andere hier nicht explizit angeführte Behälterbehandlungskomponente, welche zur Durchführung eines Behandlungsschrittes an einem Behälter geeignet ist, handeln. Jede der Behälterbehandlungskomponenten kann eine Vielzahl von Behälterbehandlungseinheiten umfassen, so dass mit jeder der Behälterbehandlungskomponenten eine Vielzahl von Behältern behandelt werden kann.

Unter dem Parameter ist insbesondere ein Maschinenparameter einer Behälterbehandlungskomponente oder ein physischer Parameter eines Behälters zu verstehen. Bei dem Maschinenparameter kann es sich beispielsweise um eine Heizleistung oder eine für die Heizleistung charakteristische Größe einer Heizvorrichtung oder um einen Vor- oder Blasdruck oder eine Reckgeschwindigkeit einer Blasformmaschine handeln. Es kann sich jedoch auch um jeden anderen hier nicht explizit angeführten Maschinenparameter handeln, welcher eine Eigenschaft des mit der Behälterbehandlungskomponente behandelten Behälters beeinflussen kann. Unter dem physischen Parameter des Behälters ist wiederum ein Parameter zu verstehen, welcher eine physische Eigenschaft eines mit einer Behälterbehandlungskomponente behandelten Behälters beschreibt. Bei dem physischen Parameter kann es sich beispielsweise um einen Transmissionsgrad oder Absorptionsgrad einer eingestrahlten elektromagnetischen Strahlung handeln, welche durch die Wand und/oder den Boden des Behälters transmittiert oder absorbiert wird. Auch eine Dichte des Behältermaterials, der Anteil orientierter oder unorientierter Polymerketten bei einem aus einem Kunststoff hergestellten Behälter, die Farbe des Behälters oder ähnliches können als physischer Parameter genutzt werden. Bei dem physischen Parameter kann es sich auch um einen Offset Anspritzpunkt oder die Größe einer Anspritzlinse handeln. Unter der Anspritzlinse ist dabei das Zentrum des Anspritzpunktes zu verstehen. Die hier angeführten Beispiele für den physischen Parameter sind als beispielhaft zu verstehen, so dass es sich bei dem physischen Parameter auch um jeden anderen, hier nicht explizit erwähnten physischen Parameter handeln kann, der geeignet ist um auf die Qualität des Behälters rückzuschließen.

Bei dem Sollwert handelt es sich um einen vorgegebenen Wert des Parameters. Handelt es sich bei dem Parameter um einen Maschinenparameter, dann kann der Sollwert des Maschinenparameters zum Beispiel basierend auf einer Eigenschaft eines mit der Behälterbehandlungsanlage behandelten Vorformlings oder Behälters gewählt sein. Ist der Maschinenparameter beispielsweise eine Heizleistung, dann kann der Sollwert der Heizleistung basierend auf einer Materialzusammensetzung eines Vorformlings gewählt sein. Handelt es sich bei dem Parameter um einen physischen Parameter eines Behälters, dann kann der Sollwert des physischen Parameters derart gewählt sein, um einen Behälter zu erhalten, welcher einer bestimmten Produktanforderung genügt oder eine bestimmte Eigenschaft aufweist. Soll der Behälter beispielsweise eine bestimmte Druckfestigkeit ausweisen, dann kann es sich bei dem Sollwert des physischen Parameters für die Druckfestigkeit charakteristische Größe (beispielsweise die Dichte des Behältermaterials) handeln, durch welche die gewünschte Druckfestigkeit des Behälters erreicht wird.

Unter Periodizität ist zu verstehen, dass die Abweichung des Parameters mit einer bestimmten Regelmäßigkeit auftritt. Es kann sich beispielsweise um eine zeitliche Periodizität handeln, bei welcher eine Abweichung immer wieder nach Verstreichen eines bestimmten Zeitintervalls, wie beispielsweise nach 1s, nach 5s oder 10s, auftritt. Unter Periodizität kann jedoch auch verstanden werden, dass beispielweise bei jedem x-ten durch die Behälterbehandlungskomponente behandelten Behälter eine Abweichung von einem Sollwert, oder bei Durchführung jedes y-ten Behandlungsprozesses eine Abweichung eines Parameters von einem Sollwert festgestellt wird, wobei x für die Anzahl der Behälter und y für die Anzahl der durchgeführten Behandlungsprozesse steht und x und y ganze Zahlen sind.

Die Qualitätssicherungseinrichtung verändert basierend auf einer bereits zur Behebung der Fehlfunktion an wenigstens einer der mindestens zwei Behälterbehandlungskomponenten vorgenommenen Anzahl an Regeleingriffen entweder einen Maschinenparameter der wenigstens einen der mindestens zwei Behälterbehandlungskomponenten gibt ein Signal aus, dass ein fehlerhaftes Bauteil der einen der wenigstens zwei Behälterbehandlungskomponenten ausgetauscht werden muss, um die Fehlfunktion an der einen der wenigstens zwei Behälterbehandlungskomponenten zu beheben. Unter einem Regeleingriff ist hierbei die Veränderung eines Maschinenparameters der wenigstens einen der mindestens zwei Behälterbehandlungskomponenten zu verstehen. So kann es beispielsweise vorgesehen sein, dass, falls die Anzahl der bereits vorgenommenen Regeleingriffe kleiner oder gleich einem Grenzwert ist, der Maschinenparameter verändert wird und falls die Anzahl der vorgenommenen Regeleingriffe größer als ein Grenzwert ist, ein Signal für einen Bauteilaustausch ausgegeben wird. Somit kann eine zielgerichtete Behebung der Fehlfunktion erreicht werden. Insbesondere lassen sich nicht nur Kosten für einen unnötigen Bauteilwechsel einsparen, sondern auch durch einen unnötigen Bauteilwechsel hervorgerufene Stillstandzeiten der Behälterbehandlungsanlage vermeiden.

In einer Ausführungsform kann die Fehlfunktion der wenigstens einen der mindestens zwei Behälterbehandlungskomponenten basierend auf der Periodizität mit welcher an der ersten Behälterbehandlungskomponente eine Abweichung eines Parameters von einem Sollwert festgestellt wird und einer für die wenigstens eine der mindestens zwei Behälterbehandlungskomponenten charakteristischen Kenngröße ermittelt werden. Durch die zusätzliche Berücksichtigung der charakteristische Kenngröße wenigstens einer der mindestens zwei Behälterbehandlungskomponenten, kann die Fehlfunktion mit höherer Genauigkeit ermittelt werden.

In einer Ausführungsform kann die charakteristische Kenngröße eine Anzahl von Behälteraufnahmen der wenigstens einen der mindestens zwei Behälterbehandlungskomponenten sein oder umfassen. Handelt es sich bei der Kenngröße um die Anzahl von Behälteraufnahmen, dann kann bei Vorliegen einer Fehlfunktion an einer Behälteraufnahme oder einer der Behälteraufnahme zugeordneten Behälterbehandlungseinheit, basierend auf der Periodizität, mit welcher die Abweichung des Parameters an der ersten Behälterbehandlungskomponente festgestellt wird, auf die fehlerhafte Behälteraufnahme oder Behälterbehandlungseinheit rückgeschlossen werden.

In einer Ausführungsform kann es sich bei dem Parameter um einen Maschinenparameter der ersten Behälterbehandlungskomponente oder um einen physischen Parameter eines Behälters handeln. Sowohl die Abweichung des Maschinenparameters als auch die Abweichung des physischen Parameters des Behälters von einem Sollwert, stellt einen direkten Indikator für das Vorliegen eines produktionsbedingten Fehlers am Behälter dar und ist somit ein besonders geeigneter Parameter um zu überprüfen ob eine Fehlfunktion an einer Behälterbehandlungskomponente vorliegt.

In einer Ausführungsform kann durch die Qualitätssicherungseinrichtung überprüft werden, ob ein Ersatzteil für das fehlerhafte Bauteil in einem der Behälterbehandlungsanlage zugeordneten Magazin enthalten ist. Somit kann bei einer irreparablen Fehlfunktion eines Bauteils sofort überprüft werden, ob ein benötigtes Ersatzteil zur Verfügung steht oder erst beschafft werden muss und somit mögliche Stillstandzeiten der Behälterbehandlungsanlage möglichst kurzgehalten werden.

In einer Ausführungsform kann, falls das Ersatzteil in dem Magazin enthalten ist, das fehlerhafte Bauteil mittels eines der Behälterbehandlungsanlage zugeordneten Roboters durch das Ersatzteil ausgetauscht werden oder einem Bediener signalisiert werden, dass das Ersatzteil in dem der Behälterbehandlungsanlage zugeordneten Magazin vorhanden ist und das fehlerhafte Bauteil der wenigstens einen der mindestens zwei Behälterbehandlungskomponenten ausgetauscht werden muss und/oder, falls das fehlerhafte Bauteil nicht in dem Magazin enthalten ist, das Ersatzteil automatisiert durch die Qualitätssicherungseinrichtung nachbestellt werden oder, die die Nachbestellung des fehlerhaften Bauteils durch die Qualitätssicherungseinrichtung durch einen Bediener freigegeben werden müssen. Durch dieses automatisierte Vorgehen, können durch die Qualitätssicherungseinrichtung bei einem fehlerhaften Bauteil sofort die notwendigen Schritte eingeleitet werden und reparaturbedingte Stillstandzeiten möglichst kurzgehalten werden.

Die erfindungsgemäße Behälterbehandlungsanlage umfasst mindestens zwei Behälterbehandlungskomponenten zum Behandeln von Behältern und eine Qualitätssicherungseinrichtung, wobei die Qualitätssicherungseinrichtung ausgebildet ist, basierend auf einer Periodizität mit welcher eine Abweichung eines Parameters an einer ersten Behälterbehandlungskomponente festgestellt wird, eine Fehlfunktion an wenigstens einer der mindestens zwei Behälterbehandlungskomponenten zu ermitteln.

Mit der erfindungsgemäßen Behälterbehandlungsanlage kann somit mit geringem messtechnischen Aufwand eine umfassende Überwachung der Behälterbehandlungsanlage erreicht und die Qualitätssicherung der Behälterbehandlungsanlage vorteilhaft verbessert werden. Insbesondere können auch Fehlfunktionen an Behälterbehandlungskomponenten ermittelt werden, welche nicht direkt messtechnisch überwacht werden oder überwacht werden können.

Die Qualitätssicherungseinrichtung ist ausgebildet zum Beheben der Fehlfunktion an der wenigstens einen der mindestens zwei Behälterbehandlungskomponenten basierend auf einer bereits zum Beheben der Fehlfunktion an der wenigstens einen der mindestens zwei Behälterbehandlungskomponenten vorgenommenen Anzahl an Regeleingriffen entweder einen Maschinenparameter der wenigstens einen der mindestens zwei Behälterbehandlungskomponenten zu verändern, oder ein Signal auszugeben, dass ein fehlerhaftes Bauteil der wenigstens einen der mindestens zwei Behälterbehandlungskomponenten ausgetauscht werden muss, um die Fehlfunktion an der wenigstens einen der mindestens zwei Behälterbehandlungskomponenten zu beheben. Somit kann zielgerichtet auf die vorliegende Fehlfunktion reagiert werden und insbesondere Kosten für einen unnötigen Bauteilwechsel eingespart oder durch einen unnötigen Bauteilwechsel hervorgerufene Stillstandzeiten der Behälterbehandlungsanlage vermieden werden.

In einer Ausführungsform kann die Qualitätssicherungseinrichtung ausgebildet sein, die Fehlfunktion der wenigstens einen der mindestens zwei Behälterbehandlungskomponenten basierend auf der Periodizität mit welcher eine Abweichung eines Parameters an einer ersten Behälterbehandlungskomponente festgestellt wird und einer für die wenigstens einen der mindestens zwei Behälterbehandlungskomponenten charakteristischen Kenngröße zu ermitteln. Durch die zusätzliche Berücksichtigung der charakteristische Kenngröße wenigstens einer der mindestens zwei Behälterbehandlungskomponenten, kann die Fehlfunktion mit höherer Genauigkeit ermittelt werden.

In einer Ausführungsform kann die charakteristische Kenngröße eine Anzahl von Behälteraufnahmen der wenigstens einen der mindestens zwei Behälterbehandlungskomponenten sein oder umfassen. Handelt es sich bei der Kenngröße um die Anzahl von Behälteraufnahmen, dann kann basierend auf der Periodizität, mit welcher die Abweichung des Parameters an der ersten Behälterbehandlungskomponente festgestellt wird, bei Vorliegen einer Fehlfunktion an einer Behälteraufnahme oder einer der Behälteraufnahme zugeordneten Behälterbehandlungseinheit die fehlerhafte Behälteraufnahme oder Behälterbehandlungseinheit ermittelt werden.

In einer Ausführungsform kann es sich bei dem Parameter um einen Maschinenparameter der ersten Behälterbehandlungskomponente oder um einen physischen Parameter eines Behälters handeln. Sowohl die Abweichung des Maschinenparameters als auch die Abweichung eines physischen Parameters des Behälters ist ein direkter Indikator für das Vorliegen eines produktionsbedingten Fehlers an dem Behälter und diese sind somit besonders geeignete Parameter, um zu überprüfen, ob eine Fehlfunktion einer Behälterbehandlungskomponente vorliegt.

In einer Ausführungsform kann die Behälterbehandlungsanlage ein Magazin für Ersatzteile für die mindestens zwei Behälterbehandlungskomponenten umfassen und die Qualitätssicherungseinrichtung ausgebildet sein zu überprüfen, ob das fehlerhafte Bauteil in dem Magazin enthalten ist. Durch das Vorsehen eines Magazins mit Ersatzteilen kann ein sofortiger Austausch eines defekten Bauteils ermöglicht werden und längere Stillstandzeiten der Behälterbehandlungsanlage vermieden werden.

In einer Ausführungsform kann die Behälterbehandlungsanlage einen Roboter umfassen, welcher ausgebildet ist das fehlerhafte Bauteil der wenigstens einen der mindestens zwei Behälterbehandlungskomponenten mit einem Ersatzteil aus dem Magazin auszutauschen. Durch den automatischen Austausch des defekten Bauteils durch den Roboter kann der Austauschprozess vollautomatisch durchgeführt werden. Reparaturbedingte Stillstandzeiten der Behälterbehandlungsanlage können so reduziert und zudem Ressourcen eingespart werden.

In einer Ausführungsform kann die Qualitätssicherungseinrichtung mit einem Server in Verbindung stehen und ausgebildet sein das fehlerhafte Bauteil nachzubestellen, falls das Bauteil nicht in dem Magazin enthalten ist, wobei die Nachbestellung des Bauteils entweder automatisch durch die Qualitätssicherungseinrichtung ausgeführt wird oder durch einen Bediener freigegeben werden muss. Durch die automatisierte Nachbestellung des Ersatzteils durch die Qualitätssicherungseinrichtung kann der Prozess möglichst zeiteffizient gestaltet werden. Zudem können Ressourcen eingespart werden und mögliche Fehler bei der Nachbestellung, wie beispielsweise die Nachbestellung eines falschen Bauteils, vermieden werden.

### Kurze Beschreibung der Figuren

- Figur 1:: Behälterbehandlungsanlage umfassende eine Vielzahl von Behälterbehandlungskomponenten und eine Qualitätssicherungseinrichtung gemäß einer Ausführungsform.
- Figur 2:: Ausschnitt einer Behälterbehandlungsanlage umfassend eine Vielzahl von Behälterbehandlungskomponenten und eine Qualitätssicherungseinrichtung gemäß einer weiteren Ausführungsform.

### Ausführliche Beschreibung der Figuren

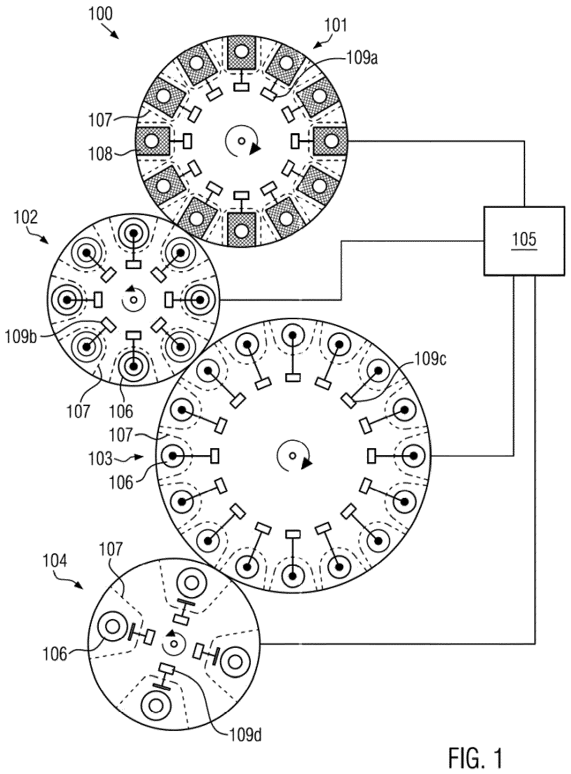

Figur 1 zeigt eine Behälterbehandlungsanlage 100 umfassend vier Behälterbehandlungskomponenten 101, 102, 103, 104 und eine Qualitätssicherungseinrichtung 105 gemäß einer Ausführungsform. Die in dieser Ausführungsform gezeigte Anzahl von vier Behälterbehandlungskomponenten ist als beispielhaft und nicht beschränkend zu verstehen. In einer alternativen Ausführungsform kann auch jede andere Anzahl von Behälterbehandlungskomponenten, welche größer als 1 ist, vorgesehen sein. Die Qualitätssicherungseinrichtung 105 (beispielsweise ein Computer oder eine Steuereinheit der Behälterbehandlungsanlage) ist ausgebildet, basierend auf einer Periodizität mit welcher eine Abweichung eines Parameters an einer ersten Behälterbehandlungskomponente 101, 102, 103, 104 von einem Sollwert festgestellt wird, eine Fehlfunktion an wenigstens einer der Behälterbehandlungskomponenten 101, 102, 103, 104 zu ermitteln.

Unter einer Behälterbehandlungskomponente 101, 102, 103, 104 ist eine Komponente der Behälterbehandlungsanlage zu verstehen, welche ausgebildet ist, einen Behandlungsschritt an einem Vorformling oder einem Behälter 106 durchzuführen. Bei der Behälterbehandlungskomponente 101, 102, 103, 104 kann es sich beispielsweise um eine Heizvorrichtung zum Temperieren von Vorformlingen, um eine Blasformmaschine zum Ausformen von Vorformlingen zu Behältern, um eine Vorrichtung zur Oberflächenbehandlung von Behältern, um eine Sterilisationseinrichtung für Behälter, um einen Füller zum Befüllen von Behältern mit einem Produkt, um einen Verschließvorrichtung zum Verschließen von Behältern, um eine Direktdruckvorrichtung zum Bedrucken von Behälter oder um eine Etikettiervorrichtung zum Etikettieren von Behältern handeln. Die eben genannten Ausgestaltungsarten der Behälterbehandlungskomponente sind als beispielhaft zu verstehen. Bei der Behälterbehandlungskomponente kann es sich auch um jede andere hier nicht explizit erwähnte Behälterbehandlungskomponente handeln, welche geeignet ist einen Behandlungsschritt an einem Behälter durchzuführen. Grundsätzlich ist als Behälterbehandlungskomponente eine Maschine zu verstehen, die wenigstens einen Behandlungsschritt an einem Behälter durchführen kann und zu diesem Zweck wenigstens eine, bevorzugt eine Vielzahl von Behandlungsstationen gleichen Typs umfasst. Die Behandlungsstationen gleichen Typs sind hier als Behandlungsstationen zu verstehen, die ausgebildet sind, alle dieselben Funktionen auszuführen.

Bevorzugt können die Behälterbehandlungskomponenten entsprechend der Ausführungsformen der Erfindung als Rundläufermaschinen (Karussells) ausgebildet sein, die jeweils die beschriebenen Behandlungsstationen umfassen.

Die Behälterbehandlungsanlage ist ausgebildet Behälter jeglicher Art zu behandeln. Vorzugsweise handelt es sich bei den Behältern jedoch um in der Getränkeindustrie zum Einsatz kommende Flaschen aus Kunststoff oder Fasern umfassendem Material. Es kann sich jedoch auch um jede andere Art von Behälter, wie beispielsweise eine Spritze, eine Tube oder eine Dose aus Kunststoff oder Fasern umfassendem Material wie sie in der Lebensmittel-, Pharma-, oder Gesundheitsindustrie verwendet werden, handeln.

Bei dem Parameter kann es sich um einen Maschinenparameter einer Behälterbehandlungskomponente 101, 102, 103, 104 oder um einen physischen Parameter eines Behälters 106 handeln. Unter dem Maschinenparameter ist insbesondere ein Maschinenparameter zu verstehen, welcher einen Einfluss auf eine Eigenschaft eines mit der Behälterbehandlungskomponente 101, 102, 103, 104 behandelten Vorformlings oder Behälters 106 hat. Ist die Behälterbehandlungskomponente 101, 102, 103, 104 beispielsweise als Blasformmaschine ausgestaltet, dann kann es sich bei dem Maschinenparameter um einen Vor- oder einen Blasdruck oder eine Reckgeschwindigkeit handeln. Bei dem physischen Parameter kann es sich beispielsweise um einen Transmissionsgrad oder Absorptionsgrad einer eingestrahlten elektromagnetischen Strahlung handeln, welche durch eine Wand und/oder den Boden des Behälters transmittiert oder absorbiert wird. Auch eine Dichte des Behältermaterials, der Anteil orientierter oder unorientierter Polymerketten bei einem aus einem Kunststoff hergestellten Behälter, die Farbe des Behälters oder ähnliches können als physischer Parameter genutzt werden. Alternativ kann der physische Parameter auch eine Offset Anspritzpunkt oder die Größe einer Anspritzlinse sein. Es kann sich jedoch auch um jeden anderen hier nicht explizit erwähnten physischen Parameter handeln, der geeignet ist um auf die Qualität des Behälters rückzuschließen.

Bei dem Sollwert handelt es sich um einen vorgegebenen Wert des Parameters. Ist der Parameter ein Maschinenparameter, dann kann der Sollwert des Maschinenparameters beispielsweise basierend auf einer Eigenschaft eines mit der Behälterbehandlungsanlage behandelten Vorformlings oder Behälters gewählt sein. Handelt es sich bei dem Maschinenparameter beispielsweise um eine Heizleistung, dann kann der Sollwert der Heizleistung basierend auf einer Materialzusammensetzung eines Vorformlings gewählt sein. Ist der Parameter ein physischer Parameter eines Behälters, dann kann der physische Parameter derart gewählt sein, dass der Behälter einer bestimmten Produktanforderung genügt, wie beispielsweise eine bestimmte Druckfestigkeit, oder eine bestimmte Eigenschaft aufweist.

Unter Periodizität ist zu verstehen, dass die Abweichung des Parameters mit einer bestimmten Regelmäßigkeit auftritt. Unter Periodizität kann beispielsweise eine zeitliche Periodizität verstanden werden. So kann eine Abweichung des Parameters von einem Sollwert immer nach Verstreichen eines bestimmten Zeitintervalls, wie beispielsweise nach 1s, nach 5s oder 10s, auftreten. Mit Periodizität kann jedoch auch gemeint sein, dass bei jedem x-ten durch die Behälterbehandlungskomponente 101, 102, 103, 104 behandelten Behälter 106 eine Abweichung des Parameters von einem Sollwert festgestellt wird, oder dass bei jedem y-ten durch eine Behälterbehandlungskomponente ausgeführten Behandlungsschritt eine Abweichung eines Parameters von einem Sollwert festgestellt wird.

In der in der Figur 1 gezeigten Ausführungsform sind die vier Behälterbehandlungskomponenten 101, 102, 103, 104 als vier Rundläufermaschinen 101, 102, 103, 104 ausgestaltet, wobei entlang des Umfangs jeder der vier Rundläufermaschinen 101, 102, 103, 104 eine Vielzahl von Behälterbehandlungsstationen mit jeweils einer Behälteraufnahme 107 angeordnet ist. Unter einer Behälteraufnahme ist dabei eine Aufnahme zu verstehen, welche ausgebildet ist einen Behälter oder eine Form zur Herstellung eines Behälters aufzunehmen. Jeder der Behälteraufnahmen kann wiederum eine Behälterbehandlungseinheit 109a, 109b, 109c, 109d (als Teil der Behälterbehandlungsstation) zur Durchführung eines Behandlungsschrittes an einem Behälter 106 zugeordnet sein. Durch die Ausstattung jeder der vier Behälterbehandlungskomponenten 101, 102, 103, 104 mit einer Vielzahl von Behälteraufnahmen 107 und Behälterbehandlungseinheiten 109a, 109b, 109c, 109d, kann mit jeder der Behälterbehandlungskomponenten 101, 102, 103, 104 eine Vielzahl von Behältern 106 behandelt werden. In der hier beschriebenen Ausführungsform umfasst die erste Behälterbehandlungskomponente 101 zwölf Behälteraufnahmen 107, die zweite Behälterbehandlungskomponente 102 acht Behälteraufnahmen 107, die dritte Behälterbehandlungskomponente 103 sechzehn Behälteraufnahmen 107 und die vierte Behälterbehandlungskomponente 104 vier Behälteraufnahmen 107. Die Anzahl der auf oder an jeder der vier Behälterbehandlungskomponenten vorgesehenen Behälteraufnahmen 107 und Behälterbehandlungseinheiten 109a, 109b, 109c, 109d ist als beispielhaft zu verstehen. Generell kann jede der Behälterbehandlungskomponenten 101, 102, 103, 104 eine beliebige Anzahl von Behälteraufnahmen 107 und Behälterbehandlungseinheiten 109a, 109b, 109c, 109d aufweisen.

In der beispielhaften Ausführungsform der Figur 1 ist die erste Rundläufermaschine 101 als eine Blasformmaschine ausgestaltet. In jeder der Behälteraufnahmen 107 der ersten Rundläufermaschine 101 ist dabei eine Blasform 108 angeordnet, in welcher Vorformlinge mittels einer Blasformeinheit 109a zu einem Behälter 106 extrudiert werden können. Die mittels der ersten Rundläufermaschine 101 erzeugten Behälter können anschließend an die zweite Rundläufermaschine 102 übergeben werden, wobei es bei der zweiten Rundläufermaschine 102 um eine Füllvorrichtung handeln kann. Jeder Behälteraufnahme 107 der zweiten Rundläufermaschine 102 ist dabei eine Fülleinheit 109b zugeordnet, um die Behälter 106 mit einem Produkt zu befüllen. Anschließend werden die befüllten Behälter 106 an die dritte Rundläufermaschine 103, welche als Verschließvorrichtung ausgestaltet sein kann, übergeben. Jeder der Behälteraufnahmen 107 der dritten Rundläufermaschine 103 ist eine Verschließeinheit 109c zugeordnet, mittels welcher die befüllten Behälter 106 verschlossen werden können. Die verschlossenen Behälter 106 werden anschließend einer vierten Rundläufermaschine 104, bei welcher es sich um eine Direktdruckvorrichtung handeln kann, übergeben. Jeder der Behälteraufnahmen der vierten Rundläufermaschine 104 ist ein Direktdruckeinheit 109d zugeordnet, um die Oberfläche des Behälters 106 mit einem Druckbild zu versehen.

In der hier diskutierten Ausführungsform ist die vierte Rundläufermaschine 104 zudem ausgebildet einen physischen Parameter oder eine Eigenschaft des Behälters zu bestimmen, um den Behälter 106 hinsichtlich seiner Qualität zu überprüfen. Beispielsweise kann die vierte Rundläufermaschine 104 eine Kamera umfassen, welche die Oberfläche des Behälters 106 hinsichtlich möglicher Unregelmäßigkeiten überprüfen kann. Die hier diskutierte spezifische Ausgestaltungsart der vier Behälterbehandlungskomponenten 101, 102, 103, 104 ist als beispielhaft zu verstehen. Jede der vier Behälterbehandlungskomponenten 101, 102, 103, 104 kann auch als jede andere Art von Behälterbehandlungsanlage.

Optional kann jeder der Behälterbehandlungskomponenten (Rundläufermaschinen) 101, 102, 103, 104 eine Steuereinheit zugeordnet sein, welche ausgebildet ist, die Funktion einer Behälterbehandlungskomponente 101, 102 ,103, 104 zu steuern. Dies kann beispielsweise durch Veränderung eines Maschinenparameters einer Behälterbehandlungskomponente erreicht werden. In einer Ausführungsform kann mittels der Steuervorrichtung beispielsweise die Funktion jeder der Behälterbehandlungseinheiten 109a, 109b 109c, 109d der Behälterbehandlungskomponenten 101, 102, 103, 104 gesteuert werden. In einer Ausführungsform kann die Steuereinheit zudem ausgebildet sein, die Drehgeschwindigkeit jeder der Rundläufermaschinen zu steuern.

Die im Zusammenhang mit der Figur 1 diskutierte Ausgestaltung der Behälterbehandlungskomponenten als Rundläufermaschinen 101, 102, 103, 104 ist als beispielhaft zu verstehen. Alternativ können die Behälterbehandlungskomponenten auch als linear arbeitenden Behälterbehandlungskomponenten ausgebildet sein. Es kann auch vorgesehen sein, dass ein Teil der Behälterbehandlungskomponenten als linear arbeitende Maschinen und ein Teil der Behälterbehandlungskomponenten als Rundläufermaschinen ausgestaltet sind.

Die Qualitätssicherungseinrichtung 105 ist ausgebildet, die Funktion der Behälterbehandlungsanlage 100 zu überwachen, eine Fehlfunktion an einer der Behälterbehandlungskomponenten 101, 102, 103, 104 zu erkennen und die Ursache für die Fehlfunktion genau zu lokalisieren. Die Qualitätssicherungseinrichtung 105 ist insbesondere ausgebildet, basierend auf einer Periodizität, mit welcher eine Abweichung eines Parameters von einem Sollwert an einer ersten Behälterbehandlungskomponente (Rundläufermaschine) 101, 102, 103, 104 festgestellt wird, eine Fehlfunktion an wenigstens einer der Behälterbehandlungskomponenten 101, 102, 103, 104 zu ermitteln. In einer Ausführungsform kann die Qualitätssicherungseinrichtung 105 als Computer ausgestaltet sein. Die Qualitätssicherungseinrichtung 105 kann mit den Behälterbehandlungskomponenten 101, 102, 103, 104 über eine physische Datenleitung verbunden sein und auf eine Vielzahl von verschiedenen Parametern der Behälterbehandlungskomponenten 101, 102, 103, 104 zugreifen und diese auswerten. Alternativ kann es auch vorgesehen sein, dass die Qualitätssicherungseinrichtung 105 über eine drahtlose Datenverbindung mit den einzelnen Behälterbehandlungskomponenten 101, 102 ,103, 104 in Verbindung steht. Wie weiter oben schon beschrieben, kann es sich bei dem Parameter um einen Maschinenparameter einer der Behälterbehandlungskomponenten oder um einen mit einer der Behälterbehandlungskomponenten 101, 102, 103, 104 messtechnisch erfassten physischen Paramater eines Behälters handeln.

Die Qualitätssicherungseinrichtung 105 kann eine Speichervorrichtung umfassen, in welcher Sollwerte für die Vielzahl von Maschineparameter der Behälterbehandlungskomponenten 101, 102, 103, 104 oder für die physischen Parameter eines Behälters 106 hinterlegt sind. Insbesondere können in der Speichervorrichtung eine Vielzahl von Datensätzen hinterlegt sein, welche einem bestimmten Typ von Behälter zugeordnet sind, so dass mittels der Qualitätssicherungseinrichtung 105 auch bei Behandlung verschiedener Behälter auf den richtigen Datensatz an Referenzdaten zugegriffen werden kann. In der Speichervorrichtung können außerdem Kenngrößen für jede der Behälterbehandlungskomponenten 101, 102, 103, 104 hinterlegt sein. Bei einer Kenngröße kann es sich beispielsweise um eine Anzahl Behälteraufnahmen 107 handeln, welche auf jeder der Behälterbehandlungskomponenten 101, 102, 103, 104 angeordnet sind.

Durch Vergleich der durch die Behälterbehandlungskomponenten zur Verfügung gestellten Parameter mit den entsprechenden Sollwerten, kann die Qualitätssicherungseinrichtung 105 feststellen, wenn eine Abweichung eines Parameters von einem Sollwert vorliegt. Wird eine Abweichung eines Parameters einer Behälterbehandlungskomponente von einem Sollwert festgestellt, dann kann durch die Qualitätssicherungseinrichtung 105 überprüft werden, ob die Abweichung wiederholt auftritt und das wiederholte Auftreten der Abweichung eine Periodizität aufweist. So kann die Qualitätssicherungseinrichtung 105 beispielsweise feststellen, ob die wiederholt auftretende Abweichung eine zeitliche Periodizität aufweist, oder ob eine Abweichung an einer Behälterbehandlungskomponente nach Behandlung einer bestimmten Anzahl von Behältern auftritt. Basierend auf der Periodizität mit welcher eine Abweichung eines Parameters von einem Sollwert an einer Behälterbehandlungskomponente festgestellt wird, kann die Qualitätssicherungseinrichtung 105 dann ermitteln, ob eine Fehlfunktion an einer der Behälterbehandlungskomponente vorliegt. Die Qualitätssicherungseinrichtung 105 kann zur Ermittlung eines Fehlers neben der Periodizität auch weitere Kenngrößen wie beispielsweise eine Anzahl von Behälteraufnahmen 107 der Behälterbehandlungskomponenten 101, 102, 103, 104 oder die Drehgeschwindigkeiten der Behälterbehandlungskomponenten verwenden, um die Fehlfunktion mit noch höherer Präzession ermitteln zu können.

In einer Ausführungsform kann es vorgesehen sein, dass jede der Behälterbehandlungskomponenten eine beliebige Anzahl m von Behälterbehandlungsstationen umfasst, wobei m eine ganze Zahl darstellt und für jede der Behälterbehandlungskomponenten einen verschiedenen Wert annehmen kann. Eine Behälterbehandlungsstation kann eine Behälteraufnahme und eine Behälterbehandlungseinheit umfassen. Wird nun beispielsweise an einer ersten Behälterbehandlungskomponente durch die Qualitätssicherungseinrichtung eine Abweichung eines Parameters von einem Sollwert festgestellt, dann kann die Qualitätssicherungseinrichtung ausgebildet sein, für einen vorgegebenen Zeitraum Z zu überprüfen, ob die Abweichung des Parameters von einem Sollwert wiederholt auftritt. Wird ein wiederholtes Auftreten der Abweichung festgestellt, kann die Qualitätssicherungseinrichtung das Auftreten der Abweichung des Parameters von einem Sollwert als Funktion der Zeit A(t) ermitteln. Durch Fourier-Transformation der so erhaltenen Funktion A(t) kann dann eine Frequenz f_{A} bestimmt werden, mit welcher die Abweichung auftritt. In einer Ausführungsform kann die Qualitätssicherungseinrichtung mittels der Fourier Transformation auch mehrere Frequenzen f_{A1}, f_{A2}, ... ermitteln. Dies ist dann der Fall, wenn die Funktion A(t) mindestens zwei mit verschiedener zeitlicher Regelmäßigkeit auftretende Abweichungen enthält. Dies kann beispielsweise dann der Fall sein, wenn an mindestens zwei verschiedenen Behälterbehandlungskomponenten eine Fehlfunktion vorliegt, so dass für jede der mindestens zwei Fehlfunktionen eine charakteristische Frequenz ermittelt werden kann.

Anhand der Frequenz kann die Qualitätssicherungseinrichtung eine Fehlfunktion an einer der Behälterbehandlungskomponenten ermitteln. Hierfür kann die durch die Fourier Transformation erhaltene Frequenz f_{A} mit einer für jede der Behälterbehandlungskomponenten charakteristischen Rotationsfrequenz f_{R}= 1/Tₓ verglichen werden, wobei Tₓ die Zeit angibt, welche eine als Rundläufermaschine ausgestaltete Behälterbehandlungskomponente x für eine volle Rotation um die eigne Achse benötigt. Alternativ zu einer Zeit kann auch die Anzahl der durchlaufenen Behälterbehandlungsstationen bis zur Wiederholung der Fehlfunktion dienen. Beides soll hier unter dem Begriff der Zeit verstanden werden. Stimmt die durch die Qualitätssicherungseinrichtung ermittelte Frequenz f_{A} mit einer der für die Behälterbehandlungskomponenten charakteristischen Frequenzen f_{R} überein, dann kann durch die Qualitätssicherungseinrichtung eine Fehlfunktion der zu der Frequenz f_{R} gehörigen Behälterbehandlungskomponente ermittelt werden. Wird mehr als eine Frequenz ermittelt, dann kann auch das Vorliegen eines Problems an mehr als einer Behälterbehandlungskomponente ermittelt werden.

In einer Ausführungsform kann die Qualitätssicherungseinrichtung zum Ermitteln der Fehlfunktion an einer Behälterbehandlungskomponente zusätzlich eine für jede der Behälterbehandlungskomponenten charakteristische Kenngröße, wie beispielsweise die Anzahl der Behälterbehandlungsstationen m einer Behälterbehandlungskomponente, verwenden. Die Behälterbehandlungsanlage kann zudem ausgebildet sein, basierend auf der Frequenz f_{A} und den für die Behälterbehandlungskomponenten charakteristischen Parameter bzw. Frequenz f_{R} und/oder der Anzahl von Behälterstation m nicht die fehlerhafte Behälterbehandlungskomponente zu ermitteln, sondern beispielsweise einen Bereich der Behälterbehandlungskomponente oder eine spezifische Behälterbehandlungsstation einer Behälterbehandlungskomponente, welche die Fehlfunktion aufweist.

Kann anhand der ermittelten Frequenz f_{A} keine Fehlfunktion an einer Behälterbehandlungskomponente ermittelt werden (insbesondere wenn die Frequenz f_{A} mit keiner charakteristischen Frequenz f_{R} der Behälterbehandlungskomponenten übereinstimmt oder die Fourier Transformationen ein kontinuierliches Spektrum von Frequenzen liefert und damit keine dominierenden Beiträge einer charakteristischen Frequenz f_{A}), dann kann es vorgesehen sein, dass durch die Qualitätssicherungseinrichtung ein optisches oder akustisches Fehlersignal ausgegeben wird.

In einer weiteren Ausführungsform kann beispielsweise durch die Qualitätssicherungseinrichtung 105 bei jedem dritten vollen Umlauf der vierten Behälterbehandlungskomponente 104 eine Abweichung eines Parameters von einem Sollwert festgestellt werden. Bei der Abweichung kann es ich beispielsweise um eine Unregelmäßigkeit an der Oberfläche eines Behälters handeln, welche mit der optional an der vierten Behälterbehandlungskomponente angeordneten Kamera detektiert wurde. Basierend auf der Tatsache, dass die vierte Behälterbehandlungskomponente 104 vier Behälteraufnahmen 107 umfasst und dass die Abweichung des Parameters bei jedem dritten vollen Umlauf der vierten Behälterbehandlungskomponente 104 auftritt, kann durch die Qualitätssicherungseinrichtung 105 ermittelt werden, dass jeder zwölfte Behälter 106, der durch die vierte Behälterbehandlungskomponente 104 behandelt wird, einen Defekt aufweist. Anhand dieser Information kann durch die Qualitätssicherungseinrichtung 105 ermittelt werden, dass die Fehlfunktion an der ersten Behälterbehandlungskomponente 101 vorliegen muss, da nur diese 12 Behälteraufnahmen aufweist. Nutzt die Qualitätssicherungseinrichtung 105 weitere Paramater der Behälterbehandlungskomponenten, wie beispielsweise die Drehwinkelgeschwindigkeit mit welcher die Behälterbehandlungskomponenten rotiert werden, dann kann die genau Behälteraufnahme und die der Behälteraufnahme zugeordnete Blasform 108 der ersten Behälterbehandlungskomponente 101 ermittelt werden, welche eine Fehlfunktion aufweist.

In einer alternativen Ausführungsform kann es beispielsweise vorgesehen sein, dass durch die dritte Behälterbehandlungskomponente 103 bei jeder halben Umdrehung der dritten Behälterbehandlungskomponente 103 ein für den Verschließprozess charakteristischer Maschinenparameter von einem Sollwert abweicht. Da die dritte Behälterbehandlungskomponente 103 sechzehn Behälteraufnahmen umfasst, wird durch die Qualitätssicherungseinrichtung festgestellt, dass bei jedem achten durch die dritte Behälterbehandlungskomponente verschlossenen Behälter ein Problem beim Verschließen des Behälters auftritt. Anhand dieser Information kann durch die Qualitätssicherungseinrichtung 105 ermittelt werden, dass an der zweiten Behälterbehandlungskomponente eine Fehlfunktion vorliegen muss, da nur diese Acht Behälteraufnahmen 107 und zugeordnete Behälterbehandlungseinheiten 109b aufweist. Anhand der Drehwinkelgeschwindigkeit der Behälterbehandlungskomponenten kann durch die Qualitätssicherungseinrichtung 105 wieder auf die Behälterbehandlungseinheit 109b rückgeschlossen werden, welche eine Fehlfunktion aufweist. In dem hier beschriebenen Ausführungsbeispiel kann beispielsweise eine mechanische Beschädigung im Kopfbereich des Behälters durch eine der Fülleinheiten 109b, für die Abweichung des für den Verschließprozess charakteristischen Parameters der dritten Behälterbehandlungskomponente 103 verantwortlich sein.

Um die vorliegende Fehlfunktion an einer Behälterbehandlungskomponente 101, 102, 103, 104 zu beheben, kann beispielweise ein Maschinenparameter nachgeregelt werden. So kann im eben diskutierten Ausführungsbeispiel beispielsweise die fehlerhafte Fülleinheit 109b neu zentriert werden, um eine Berührung mit dem Kopfbereich des Behälters 106 zu verhindern. Alternativ kann es auch vorgesehen sein, das fehlerhafte Bauteil durch ein entsprechendes Ersatzteil auszutauschen.

Es ist vorgesehen, dass basierend auf der Anzahl der Regeleingriffe, welche bereits vorgenommen wurden, um eine bestimmte Fehlfunktion zu beheben, automatisch (beispielsweise durch die Qualitätssicherungseinrichtung und/oder eine Steuereinheit der betreffenden Behälterbehandlungskomponente und/oder einer zentralen Steuereinheit der Behälterbehandlungsanlage) entschieden wird, ob das Problem durch Nachregelung eines Maschinenparameters behoben werden kann, oder ob ein Austausch eines Bauteils notwendig ist. So kann es beispielweise vorgesehen sein, dass, wenn die Anzahl der bereits vorgenommenen Regeleingriffe kleiner oder gleich einem bestimmten Grenzwert ist, ein Maschinenparamater nachgeregelt wird. Ist die Anzahl der bereits vorgenommenen Regeleingriffe größer als ein bestimmter Grenzwert, dann wird ein beispielsweise optisches oder akustisches Signal (beispielsweise an einen Bediener) ausgegeben, dass ein bestimmtes Bauteil ausgetauscht werden muss. Der Grenzwert kann basierend auf der vorliegenden Fehlfunktion gewählt sein, so dass beispielsweise bei Vorliegen einer ersten Fehlfunktion vorgesehen ist, nur eine geringe Anzahl von Regeleingriffen vorzunehmen, wie beispielsweise einen oder zwei Regeleingriffe, und dass es bei Vorliegen einer zweiten Fehlfunktion vorgesehen ist, eine höhere Anzahl von Regeleingriffen, wie beispielsweise zehn oder fünfzehn Regeleingriffe, vorzunehmen, bevor ein Bauteilwechsel in die Wege geleitet wird. Bei Vorliegen einer dritten Fehlfunktion kann es beispielsweise auch vorgesehen sein, dass überhaupt nicht nachgeregelt wird und das fehlerhafte Bauteil sofort durch ein Ersatzteil ausgetauscht wird.

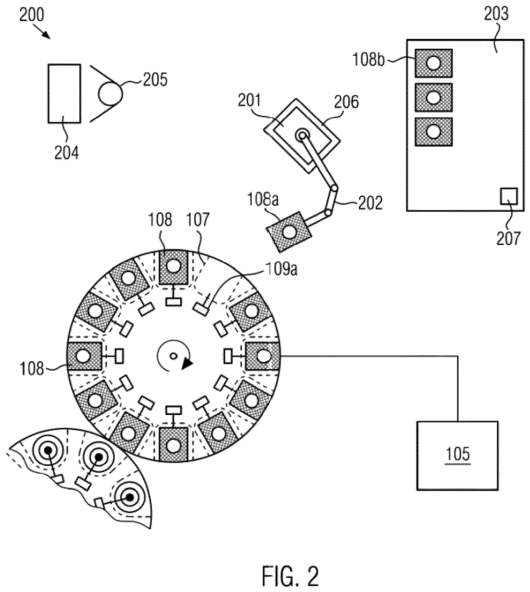

Figur 2 zeigt einen Ausschnitt 200 der bereits im Zusammenhang mit der Figur 1 diskutierten Behälterbehandlungsanlage 100 gemäß einer weiteren Ausführungsform. In der hier gezeigten Ausführungsform umfasst die Behälterbehandlungsanlage 200 zusätzlich ein Magazin 203 und einen Roboter 201. Der Roboter 201 ist dabei ausgebildet, ein fehlerhaftes Bauteil 108a an einer der Behälterbehandlungskomponenten mit einem in dem Magazin 203 enthaltenen Ersatzteil 108b zu tauschen.

Wie ausführlich im Zusammenhang mit der Figur 1 diskutiert, ist es vorgesehen, dass die Qualitätssicherungseinrichtung 105 basierend auf einer bereits zur Behebung einer Fehlfunktion vorgenommenen Anzahl an Regeleingriffen entscheidet, ob die Fehlfunktion durch Nachregelung eines Maschinenparameters behoben werden kann, oder ob ein Austausch des fehlerhaften Bauteils notwendig ist.

Um reparaturbedingte Stillstandzeiten der Behälterbehandlungsanlage 200 im Falle eines Bauteilwechsels möglichst kurz zu halten, kann die Behälterbehandlungsanlage 200 ein Magazin 203 umfassen, in welchem Ersatzteile 108b für die verschiedenen Behälterbehandlungskomponenten gelagert werden können. Das Magazin kann zudem einen Computer 207 mit einer Speichervorrichtung umfassen, wobei die Speichervorrichtung eine Datenbank umfasst, in welcher alle in dem Magazin 203 enthaltenen Ersatzteile 108b aufgeführt sind.

In einer Ausführungsform kann es vorgesehen sein, dass jedem der Ersatzteile 108b eine eindeutige Kennung zugeordnet ist, so dass jedem Bauteil der verschiedenen Behälterbehandlungskomponenten 101, 102, 10, 104 eindeutig ein Ersatzteil 108b aus dem Magazin 203 zugeordnet werden kann. Alternativ kann es auch vorgesehen sein, dass eine Datenbank mit einer Übersicht aller der in dem Magazin 203 enthaltenen Ersatzteile zentral auf einem externen Server gespeichert ist.

Wird durch die Qualitätssicherungseinrichtung 105 erkannt, dass ein Austausch des fehlerhaften Bauteils 108a zur Fehlerbehebung nötig ist, dann kann die Qualitätssicherungseinrichtung 105 durch einen Abruf der Datenbank auf einfach Weise überprüfen, ob das fehlerhafte Bauteil in dem Magazin 203 enthalten ist oder nicht. Fall die Datenbank auf einem externen Server gespeichert ist, so kann die Qualitätssicherungseinrichtung 105 mit diesem Server verbunden sein. Stellt die Qualitätssicherungseinrichtung 105 fest, dass das gesuchte Ersatzteil in dem Magazin enthalten ist, dann kann die Qualitätssicherungseinrichtung 105 einen Bediener 205 über eine Schnittstelle 204 über das fehlerhafte Bauteil 108a und das in dem Magazin 203 befindliche Ersatzteil 108b informieren. Zusätzlich können dem Bediener 205 weitere Informationen über das fehlerhafte Bauteil 108a zur Verfügung gestellt werden.

In einer Ausführungsform ist es vorgesehen, dass der Wechsel vollautomatisch durch den Roboter 201 ausgeführt wird. Alternativ kann es auch vorgesehen sein, dass ein Bediener 205 den Bauteilwechsel durch den Roboter 201 begleitet. Die Qualitätssicherungseinrichtung 105 kann dem Roboter 201 hierfür genaue Information über vorliegenden Defekt an der Behälterbehandlungskomponente und über den genauen Lagerort des Ersatzteils 108b in dem Magazin 203 zur Verfügung stellen. Basierend auf den durch die Qualitätssicherungseinrichtung 105 zur Verfügung gestellten Informationen kann der Roboter 201 das fehlerhafte Bauteil der Behälterbehandlungskomponente vollautomatisch austauschen. Der Roboter kann der Qualitätssicherungseinrichtung 105 wiederum Informationen zur Verfügung stellen, ob der Bauteilwechsel ordnungsgemäß durchgeführt werden konnte, oder ob Probleme beim Bauteilwechsel aufgetreten sind. War der Wechsel erfolgreich, dann kann die Qualitätssicherungseinrichtung 105 Schritte einleiten, so dass der Betrieb der Behälterbehandlungsanlage wieder automatisch aufgenommen wird. Wird durch den Roboter ein Problem beim Bauteilwechsel gemeldet, dann kann die Qualitätssicherungseinrichtung 105 einen Bediener 205 zur Behebung des Problems verständigen.

Der Roboter 201 kann einen Arm 202 mit mehreren Gelenken umfassen, um auch komplizierte Bauteilwechsel ausführen zu können. Der Roboter kann beispielsweise auf einem mit Rädern versehen Wagen 206 angeordnet sein und mit einem Navigationssystem versehen sein, um durch die Behälterbehandlungsanlage zu den Behälterbehandlungskomponenten navigieren zu können. Zusätzlich kann der Roboter ein Sicherheitssystem umfassen, durch das in der Behälterbehandlungsanlage anwesende Menschen erkannt und mögliche Kollisionen mit Menschen verhindert werden können. Alternativ können in der Behälterbehandlungsanlage auch Schienen verlegt sein, so dass sich der Roboter nur auf einem durch die Schienen vorgegebenen Weg durch die Behälterbehandlungsanlage und zu den jeweiligen Behälterbehandlungskomponenten bewegen kann. Der Roboter kann hierfür auf einem Wagen angeordnet sein, wobei der Wagen mit den Schienen einen Linearantrieb bildet. Es kann auch für jede Behälterbehandlungskomponente genau ein Roboter vorgesehen sein, der einen Austausch von Ersatzteilen für nur diese Behälterbehandlungskomponente durchführt. Ebenso kann separat jeder Behälterbehandlungskomponente genau ein Magazin mit Ersatzteilen zugeordnet sein.

Ermittelt die Qualitätssicherungseinrichtung 105 dagegen nach Abruf der Datenbank, dass das fehlerhafte Bauteil nicht in dem Magazin auf Lager ist, dann kann das Bauteil durch die Qualitätssicherungseinrichtung 105 vollautomatisch nachbestellt werden. Um den Nachbestellvorgang vollautomatisch tätigen zu können, kann die Qualitätssicherungseinrichtung 105 mit dem Internet oder einem Server verbunden sein. In einer alternativen Ausführungsform kann es vorgesehen sein, dass der Bestellvorgang semiautomatisch durchgeführt wird und erst durch einen Bediener 205 freigegeben werden muss.

## Patentansprüche

1. Verfahren zur Qualitätssicherung einer Behälterbehandlungsanlage (100, 200), wobei die Behälterbehandlungsanlage (100, 200) mindestens zwei Behälterbehandlungskomponenten (101, 102, 103, 104) umfasst, wobei mittels einer Qualitätssicherungseinrichtung (105) basierend auf einer Periodizität, mit welcher an einer ersten Behälterbehandlungskomponente (101, 102, 103, 104) eine Abweichung eines Parameters von einem Sollwert festgestellt wird, eine Fehlfunktion an wenigstens einer der mindestens zwei Behälterbehandlungskomponenten (101, 102, 103, 104) ermittelt wird,
**dadurch gekennzeichnet, dass**
die Qualitätssicherungseinrichtung (105) basierend auf einer bereits zur Behebung der Fehlfunktion an wenigstens einer der mindestens zwei Behälterbehandlungskomponenten (101, 102, 103, 104) vorgenommenen Anzahl an Regeleingriffen entscheidet, entweder einen Maschinenparameter der wenigstens einen der mindestens zwei Behälterbehandlungskomponenten (101,102, 103, 104) zu verändern oder ein Signal auszugeben, dass ein fehlerhaftes Bauteil (108a) der einen der wenigstens zwei Behälterbehandlungskomponenten (101, 102, 103, 104) ausgetauscht werden muss, um die Fehlfunktion an der einen der wenigstens zwei Behälterbehandlungskomponenten (101, 102, 103, 104) zu beheben.

2. Verfahren nach Anspruch 1, wobei die Fehlfunktion der wenigstens einen der mindestens zwei Behälterbehandlungskomponenten (101, 102, 103, 104) basierend auf der Periodizität mit welcher an der ersten Behälterbehandlungskomponente (101, 102, 103, 104) eine Abweichung eines Parameters von einem Sollwert festgestellt wird und einer für die wenigstens eine der mindestens zwei Behälterbehandlungskomponenten (101, 102, 103, 104) charakteristischen Kenngröße ermittelt wird.

3. Verfahren nach Anspruch 2, wobei die charakteristische Kenngröße eine Anzahl von Behälteraufnahmen (107) der wenigstens einen der mindestens zwei Behälterbehandlungskomponenten (101, 102, 103, 104) ist oder umfasst.

4. Verfahren nach einem der Ansprüche 1 bis 3, wobei es sich bei dem Parameter um einen Maschinenparameter der ersten Behälterbehandlungskomponente (101, 102, 103, 104) oder um einen physischen Parameter eines Behälters (106) handelt.

5. Verfahren nach einem der Ansprüche 1 bis 4, wobei durch die Qualitätssicherungseinrichtung (105) überprüft wird, ob ein Ersatzteil für das fehlerhafte Bauteil (108a) in einem der Behälterbehandlungsanlage (100, 200) zugeordneten Magazin (203) enthalten ist.

6. Verfahren nach Anspruch 5, wobei, falls das Ersatzteil in dem Magazin (203) enthalten ist, das fehlerhafte Bauteil (108a) mittels eines der Behälterbehandlungsanlage (100, 200) zugeordneten Roboters (201) durch das Ersatzteil (108b) ausgetauscht wird oder einem Bediener (205) signalisiert wird, dass das Ersatzteil (108b) in dem der Behälterbehandlungsanlage (100, 200) zugeordneten Magazin (203) vorhanden ist und das fehlerhafte Bauteil (108a) der wenigstens einen der mindestens zwei Behälterbehandlungskomponenten (101, 102, 103 ,104) ausgetauscht werden muss und/oder wobei, falls das fehlerhafte Bauteil (108a) nicht in dem Magazin (203) enthalten ist, das Ersatzteil (108b) automatisiert durch die Qualitätssicherungseinrichtung (105) nachbestellt wird oder, wobei die die Nachbestellung des fehlerhaften Bauteils durch die Qualitätssicherungseinrichtung (105) durch einen Bediener (205) freigegeben werden muss.

7. Behälterbehandlungsanlage (100, 200), umfassend mindestens zwei Behälterbehandlungskomponenten (101, 102, 103, 104) zum Behandeln von Behältern (106) und eine Qualitätssicherungseinrichtung (105), wobei die Qualitätssicherungseinrichtung (105) ausgebildet ist, basierend auf einer Periodizität mit welcher eine Abweichung eines Parameters an einer ersten Behälterbehandlungskomponente (101, 102, 103, 104) festgestellt wird, eine Fehlfunktion an wenigstens einer der mindestens zwei Behälterbehandlungskomponenten (101, 102, 103, 104) zu ermitteln,
**dadurch gekennzeichnet, dass**
die Qualitätssicherungseinrichtung (105) ausgebildet ist zum Beheben der Fehlfunktion an der wenigstens einen der mindestens zwei Behälterbehandlungskomponenten (101, 102, 103, 104) basierend auf einer bereits zum Beheben der Fehlfunktion an der wenigstens einen der mindestens zwei Behälterbehandlungskomponenten (101, 102, 103, 104) vorgenommenen Anzahl an Regeleingriffen zu entscheiden, entweder einen Maschinenparameter der wenigstens einen der mindestens zwei Behälterbehandlungskomponenten (101, 102, 103, 104) zu verändern, oder ein Signal auszugeben, dass ein fehlerhaftes Bauteil der wenigstens einen der mindestens zwei Behälterbehandlungskomponenten (101, 102, 103, 104) ausgetauscht werden muss, um die Fehlfunktion an der wenigstens einen der mindestens zwei Behälterbehandlungskomponenten (101, 102, 103, 104) zu beheben.

8. Behälterbehandlungsanlage (100, 200) nach Anspruch 7, wobei die Qualitätssicherungseinrichtung (105) ausgebildet ist, die Fehlfunktion der wenigstens einen der mindestens zwei Behälterbehandlungskomponenten (101, 102, 103, 104) basierend auf der Periodizität mit welcher eine Abweichung eines Parameters an einer ersten Behälterbehandlungskomponente (101, 102, 103, 104) festgestellt wird und einer für die wenigstens eine der mindestens zwei Behälterbehandlungskomponenten (101, 102, 103, 104) charakteristischen Kenngröße zu ermitteln.

9. Behälterbehandlungsanlage (100, 200) nach Anspruch 8, wobei die charakteristische Kenngröße eine Anzahl von Behälteraufnahmen der wenigstens einen der mindestens zwei Behälterbehandlungskomponenten (101, 102, 103, 104) ist oder umfasst.

10. Behälterbehandlungsanlage (100, 200) nach einem der Ansprüche 7 bis 9, wobei es sich bei dem Parameter um einen Maschinenparameter der ersten Behälterbehandlungskomponente (101, 102, 103, 104) oder um einen physischen Parameter eines Behälters (106) handelt.

11. Behälterbehandlungsanlage (100, 200) nach einem der Ansprüche 7 bis 10, wobei die Behälterbehandlungsanlage (100, 200) ein Magazin (203) für Ersatzteile (108b) für die mindestens zwei Behälterbehandlungskomponenten (101, 102, 103, 104) umfasst und wobei die Qualitätssicherungseinrichtung (105) ausgebildet ist zu überprüfen, ob das fehlerhafte Bauteil (108a) in dem Magazin (203) enthalten ist.

12. Behälterbehandlungsanlage (100, 200) nach Anspruch **11,** wobei die Behälterbehandlungsanlage (100, 200) einen Roboter (201) umfasst, welcher ausgebildet ist das fehlerhafte Bauteil (108a) der wenigstens einen der mindestens zwei Behälterbehandlungskomponenten (101, 102, 103, 104) mit einem Ersatzteil (108b) aus dem Magazin (203) auszutauschen.

13. Behälterbehandlungsanlage (100, 200) nach einem der Ansprüche 7 bis 12, wobei die Qualitätssicherungseinrichtung (105) mit einem Server in Verbindung steht und ausgebildet ist das fehlerhafte Bauteil (108a) nachzubestellen, falls das Bauteil (108a) nicht in dem Magazin (203) enthalten ist, wobei die Nachbestellung des Bauteils (108a) entweder automatisch durch die Qualitätssicherungseinrichtung (105) ausgeführt wird oder durch einen Bediener (205) freigegeben werden muss.

## Claims

1. A method for quality management of a container treatment plant (100, 200), wherein the container treatment plant (100, 200) comprises at least two container treatment components (101, 102, 103, 104), wherein by means of a quality management device (105) based on a periodicity with which at a first container treatment component (101, 102, 103, 104) a deviation of a parameter from a set value is established a malfunction of at least one of the at least two container treatment components (101, 102, 103, 104) is detected,
**characterized in that**
on the basis of the number of control actions taken on at least one of the at least two container treatment components (101, 102, 103, 104) for correcting the malfunction the quality management device (105) decides to either alter a machine parameter of the at least one of the at least two container treatment components (101,102, 103, 104) or to output a signal requesting to exchange a defective member (108a) of the one of the at least two container treatment components (101, 102,103, 104) so as to correct the malfunction on the one of the at least two container treatment components (101, 102,103, 104).

2. The method according to claim 1, wherein the malfunction of the at least one of the at least two container treatment components (101, 102,103, 104) is detected on the basis of the periodicity with which at the first container treatment component (101, 102, 103, 104) a deviation of a parameter from a set value is established and of a characteristic quantity of the at least one of the at least two container treatment components (101, 102,103,104).

3. The method according to claim 2, wherein the characteristic quantity is or comprises a number of container receptacles (107) of the at least one of the at least two container treatment components (101, 102, 103, 104).

4. The method according to any one of claims 1 to 3, wherein the parameter is a machine parameter of the first container treatment component (101, 102, 103, 104) or a physical parameter of a container (106).

5. The method according to anyone of claims 1 to 4, wherein the quality management device (105) is adapted for checking whether a replacement part for the defective member (108a) is provided in a magazine (203) associated with the container treatment plant (100, 200).

6. The method according to claim 5, wherein in case the replacement part is provided in the magazine (203), the defective member (108a) is exchanged for the replacement part (108b) by means of a robot (201) associated with the container treatment plant (100, 200) or an operator (205) is notified that the replacement part (108b) is provided in the magazine (203) associated with the container treatment plant (100, 200) and that the defective member (108a) of the at least one of the at least two container treatment components (101, 102, 103 ,104) needs to be exchanged and/or in case the defective member (108a) is not provided in the magazine (203) the replacement part (108b) is automatically reordered by the quality management device (105) or wherein the reorder of the defective member by the quality management device (104) has to be enabled by an operator (205).

7. A container treatment plant (100, 200), comprising at least two container treatment components (101, 102, 103, 104) for treating containers (106) and a quality management device (105), wherein the quality management device (105) is configured to detect a malfunction on at least one of the at least two container treatment components (101, 102, 103, 104) based on a periodicity with which at a first container treatment component (101, 102, 103, 104) a deviation of a parameter from a set value is established, **characterized in that**
for correcting the malfunction the quality management device (105) is configured to decide on the basis of the number of control actions already taken on at least one of the at least two container treatment components (101, 102, 103, 104) to either alter a machine parameter of the at least one of the at least two container treatment components (101,102, 103, 104) or to output a signal requesting to exchange a defective member (108a) of the at least one of the at least two container treatment components (101, 102,103, 104) in order to correct the malfunction on the at least one of the at least two container treatment components (101, 102, 103, 104).

8. The container treatment plant (100, 200) according to claim 7, wherein the quality management device (105) is configured to detect the malfunction of the at least one of the at least two container treatment components (101, 102,103, 104) on the basis of the periodicity with which at the first container treatment component (101, 102, 103, 104) a deviation of a parameter from a set value is established and of a characteristic quantity of the at least one of the at least two container treatment components (101, 102,103,104).

9. The container treatment plant (100, 200) according to claim 8, wherein the characteristic quantity is or comprises a number of container receptacles of the at least one of the at least two container treatment components (101, 102, 103, 104).

10. The container treatment plant (100, 200) according to anyone of claims 7 to 9, wherein the parameter is a machine parameter of the first container treatment component (101, 102, 103, 104) or a physical parameter of a container (106).

11. The container treatment plant (100, 200) according to anyone of claims 7 to 10, wherein the container treatment plant (100, 200) comprises a magazine (203) for replacement parts (108b) for the at least two container treatment components (101, 102, 103, 104) and wherein the quality management device (105) is configured to check whether the defective member (108a) is provided in the magazine (203).

12. The container treatment plant (100, 200) according to claim 11, wherein the container treatment plant (100, 200) comprises a robot (201) which is configured to exchange the defective member (108a) of the at least one of the at least two container treatment components (101, 102, 103, 104) for a replacement part (108b) from the magazine (203).

13. The container treatment plant (100, 200) according to anyone of claims 7 to 12, wherein the quality management device (105) communicates with a server and is configured to reorder the defective member (108a) in case the member (108a) is not provided in the magazine (203), wherein the reorder of the member (108a) is carried out either automatically by the quality management device (105) or has to be enabled by an operator (205).

## Revendications

1. Procédé permettant de garantir la qualité d'une installation de traitement de récipients (100, 200), dans lequel l'installation de traitement de récipients (100, 200) comprend au moins deux composants de traitement de récipients (101, 102, 103, 104), dans lequel un dysfonctionnement au niveau d'au moins un des au moins deux composants de traitement de récipients (101, 102, 103, 104) est déterminé au moyen d'un dispositif de garantie de qualité (105) en se basant sur une périodicité avec laquelle un écart d'un paramètre par rapport à une valeur de consigne est constaté au niveau d'un premier composant de traitement de récipients (101, 102, 103, 104), **caractérisé en ce que**
le dispositif de garantie de qualité (105) décide, en se basant sur un nombre d'interventions de régulation déjà mises en œuvre afin de remédier au dysfonctionnement au niveau du au moins un des au moins deux composants de traitement de récipients (101, 102, 103, 104), soit de modifier un paramètre de machine du au moins un des au moins deux composants de traitement de récipients (101, 102, 103, 104), soit d'émettre un signal indiquant qu'un constituant défectueux (108a) du un des au moins deux composants de traitement de récipients (101, 102, 103, 104) doit être remplacé afin de remédier au dysfonctionnement au niveau du un des au moins deux composants de traitement de récipients (101, 102, 103, 104).

2. Procédé selon la revendication 1, dans lequel le dysfonctionnement du au moins un des au moins deux composants de traitement de récipients (101, 102, 103, 104) est déterminé en se basant sur la périodicité avec laquelle un écart d'un paramètre par rapport à une valeur de consigne est constaté au niveau du premier composant de traitement de récipients (101, 102, 103, 104) et en se basant sur une grandeur caractéristique pour le au moins un des au moins deux composants de traitement de récipients (101, 102, 103, 104).

3. Procédé selon la revendication 2, dans lequel la grandeur caractéristique est ou comprend un certain nombre de logements de récipient (107) du au moins un des au moins deux composants de traitement de récipients (101, 102, 103, 104).

4. Procédé selon l'une quelconque des revendications 1 à 3, dans lequel le paramètre est un paramètre de machine du premier composant de traitement de récipients (101, 102, 103, 104) ou un paramètre physique d'un récipient (106).

5. Procédé selon l'une quelconque des revendications 1 à 4, dans lequel le dispositif de garantie de qualité (105) vérifie si une pièce de rechange pour le constituant défectueux (108a) est contenue dans un magasin (203) associé à l'installation de traitement de récipients (100, 200).

6. Procédé selon la revendication 5, dans lequel, si la pièce de rechange est contenue dans le magasin (203), le constituant défectueux (108a) est remplacé par la pièce de rechange (108b) au moyen d'un robot (201) associé à l'installation de traitement de récipients (100, 200) ou un opérateur (205) se voit signaler que la pièce de rechange (108b) est présente dans le magasin (203) associé à l'installation de traitement de récipients (100, 200) et que le constituant défectueux (108a) du au moins un des au moins deux composants de traitement de récipients (101, 102, 103, 104) doit être remplacé, et/ou dans lequel, si le constituant défectueux (108a) n'est pas contenu dans le magasin (203), la pièce de rechange (108b) est commandée de manière automatisée par le dispositif de garantie de qualité (105), ou dans lequel le réassort du constituant défectueux par le dispositif de garantie de qualité (105) doit être validé par un opérateur (205).

7. Installation de traitement de récipients (100, 200), comprenant au moins deux composants de traitement de récipients (101, 102, 103, 104) permettant de traiter des récipients (106) et un dispositif de garantie de qualité (105), dans laquelle le dispositif de garantie de qualité (105) est conçu pour déterminer un dysfonctionnement au niveau d'au moins un des au moins deux composants de traitement de récipients (101, 102, 103, 104) en se basant sur une périodicité avec laquelle un écart d'un paramètre est constaté au niveau d'un premier composant de traitement de récipients (101, 102, 103, 104),
**caractérisée en ce que**
le dispositif de garantie de qualité (105), afin de remédier au dysfonctionnement au niveau du au moins un des au moins deux composants de traitement de récipients (101, 102, 103, 104), est conçu pour décider, en se basant sur un nombre d'interventions de régulation déjà mises en œuvre afin de remédier au dysfonctionnement au niveau du au moins un des au moins deux composants de traitement de récipients (101, 102, 103, 104), soit de modifier un paramètre de machine du au moins un des au moins deux composants de traitement de récipients (101, 102, 103, 104), soit d'émettre un signal indiquant qu'un constituant défectueux du au moins un des au moins deux composants de traitement de récipients (101, 102, 103, 104) doit être remplacé afin de remédier au dysfonctionnement au niveau du au moins un des au moins deux composants de traitement de récipients (101, 102, 103, 104).

8. Installation de traitement de récipients (100, 200) selon la revendication 7, dans laquelle le dispositif de garantie de qualité (105) est conçu pour déterminer le dysfonctionnement du au moins un des au moins deux composants de traitement de récipients (101, 102, 103, 104) en se basant sur la périodicité avec laquelle un écart d'un paramètre est constaté au niveau d'un premier composant de traitement de récipients (101, 102, 103, 104) et en se basant sur une grandeur caractéristique pour le au moins un des au moins deux composants de traitement de récipients (101, 102, 103, 104).

9. Installation de traitement de récipients (100, 200) selon la revendication 8, dans laquelle la grandeur caractéristique est ou comprend un certain nombre de logements de récipient du au moins un des au moins deux composants de traitement de récipients (101, 102, 103, 104).

10. Installation de traitement de récipients (100, 200) selon l'une quelconque des revendications 7 à 9, dans laquelle le paramètre est un paramètre de machine du premier composant de traitement de récipients (101, 102, 103, 104) ou un paramètre physique d'un récipient (106).

11. Installation de traitement de récipients (100, 200) selon l'une quelconque des revendications 7 à 10, dans laquelle l'installation de traitement de récipients (100, 200) comprend un magasin (203) de pièces de rechange (108b) pour les au moins deux composants de traitement de récipients (101, 102, 103, 104) et dans laquelle le dispositif de garantie de qualité (105) est conçu pour vérifier si le constituant défectueux (108a) est contenu dans le magasin (203).

12. Installation de traitement de récipients (100, 200) selon la revendication 11, dans laquelle l'installation de traitement de récipients (100, 200) comprend un robot (201) qui est conçu pour remplacer le constituant défectueux (108a) du au moins un des au moins deux composants de traitement de récipients (101, 102, 103, 104) par une pièce de rechange (108b) provenant du magasin (203).

13. Installation de traitement de récipients (100, 200) selon l'une quelconque des revendications 7 à 12, dans laquelle le dispositif de garantie de qualité (105) est en liaison avec un serveur et est conçu pour commander à nouveau le constituant défectueux (108a) si le constituant (108a) n'est pas contenu dans le magasin (203), dans laquelle le réassort du composant (108a) est mis en œuvre de manière automatisée par le dispositif de garantie de qualité (105) ou doit être validé par un opérateur (205).
